# EUROPEAN PATENT APPLICATION

(11) **EP 3 978 897 A1**
(43) Date of publication of application: **06.04.2022**
(21) Application number: 19930846.1
(22) Date of filing: 29.05.2019
(51) Int. Cl.: G01N 1/38, B01F 11/00, G01N 35/00, G01N 35/04

(54) **ANALYSIS DEVICE**

(71) Applicant: Hitachi High-Tech Corporation, Minato-ku Tokyo 105-6409 (JP)
(72) Inventor: NISHIURA, Kento, Tokyo 105-6409 (JP); YABUHARA Tadao, Tokyo 105-6409 (JP)
(74) Representative: MERH-IP Matias Erny Reichl Hoffmann Patentanwälte PartG mbB
(86) International application number: PCT/JP2019/021206
(87) International publication number: WO 2020/240722

(57) **Abstract**

Analysis devices for observing and measuring sample solutions have had a problem in which an irregular sample distribution will lead to irregular measurement results and measurement error. That is why it is preferable for a sample solution to have an average sample distribution. To address the abovementioned problem, this analysis device is made to comprise a sample container holding part and a conveying stage and is characterized by comprising a vibration mechanism for using electrical current and a magnet to vibrate the sample container holding part above a conveying path and mixing a sample solution in a container.

## Description

### Technical Field

The present invention relates to an analysis device for repeatedly measuring and observing many samples.

### Background Art

In an analysis device for performing optical measurement and image acquisition of a sample, for example, when measuring a density or a concentration such as measuring an optical density of a sample in which unevenness caused by aggregation or precipitation and the like of a sample solution occurs due to a lapse of time, stirring the sample to be measured and making the sample uniform is effective to improve measurement accuracy. In addition, when measuring and observing a growth of bacteria and the like, stirring the sample to be measured and making the sample uniform is also effective to improve the measurement accuracy.

As an automatic analysis device provided with a stirring mechanism in the related art, for example, JP-A-2017-15501 discloses an analysis device in which a stirrer implemented by a rod-shaped magnetic material is placed inside a cell, and a liquid in the cell is stirred by a plurality of magnets arranged on an outer peripheral side of a rotary table . Further, JP JP-A-2000-121511 discloses a device in which through holes are formed in placement portions of a turntable on which respective containers of a conveying device are placed, and a stirring unit is provided with vibratable vibration pins each passing through the through hole from a bottom side of the turntable, at a secured position on a path of at least one location where the placement portions stop.

### Citation list

### Patent Literature

PTL 1: JP-A-2017-15501
PTL 2: JP-A-2000-121511

### Summary of Invention

### Technical Problem

In an analysis device for performing measurement of a sample, for example, an analysis device for performing optical measurement or the like, uniformity of a sample in a sample solution greatly affects the measurement accuracy. There is a problem in which an irregular sample distribution will lead to irregular measurement results and measurement error. In addition, in an analysis device for acquiring an image of a sample, it is preferable for a sample distribution in the image to have an average state of a sample solution. In measurement of a concentration and the number of individuals based on an image of a non-uniform solution, different values are shown depending on positions of acquired images, and it is difficult to set a focal position for obtaining a more accurate measurement value. In addition, in order to reduce the risk of contamination of a sample, there is a demand for an analysis device capable of stirring a sample solution in which a material such as a stirrer is not added to the sample solution and shortening a sample processing time.

In order to address the above problem, an object of the invention is to provide an analysis device provided with a mechanism that stirs a sample solution during conveying of a sample.

### Solution to Problem

In order to address the above problem, one aspect of the invention provides an analysis device for measuring and observing a sample solution, and the analysis device includes: a storage unit configured to store a container containing a sample; a measurement unit configured to measure and observe the sample; a conveying unit configured to convey the container between the storage unit and the measurement unit; and a control unit configured to control and record operations of the storage unit, the measurement unit, and the conveying unit. The conveying unit includes a sample container holding part configured to prevent the container from dropping off, a conveying stage in which the sample container holding part is provided, and a vibration mechanism configured to use a magnetic field and an electrical current or magnet to vibrate the sample container holding part on a conveying path and stir the sample solution in the container.

### Advantageous Effect

A sample in a solution can be kept uniform, and measurement accuracy can be improved by stirring the sample. In addition, in a case of acquiring an image, it is possible to obtain the image in which the sample is uniformly distributed. Since a precipitated sample also can be made uniform in the solution, a focal position for imaging may be in the solution, and the focal position of an optical system can be easily set. In addition, the stirring can be performed on a conveying path, and the stirring can be performed until the sample container is moved to the measurement unit.

In addition, since it is not necessary to add a material necessary for stirring, such as a stirrer, into the sample solution, the risk of contamination is reduced. According to the invention, it is possible to stir the sample while conveying the sample container, and it is not necessary to stop a conveying operation during the stirring, and thus it is possible to shorten the sample processing time. Therefore, a sample processing capability per unit time of the analysis device is increased as compared with that of a device in which conveying and stirring are generally separated from each other or a device in which conveying is stopped for stirring.

### Brief Description of Drawings

[FIG. 1a] FIG. 1a is an overall configuration plan diagram schematically showing an analysis device according to a first embodiment.
[FIG. 1b] FIG. 1b is an overall configuration front diagram schematically showing the analysis device according to the first embodiment.
[FIG. 2] FIG. 2 is a diagram illustrating an operation example when acquiring an image of a sample in a measurement part.
[FIG. 3a] FIG. 3a is a schematic diagram of a conveying stage.
[FIG. 3b] FIG. 3b is a cross section of the conveying stage taken along a line A-A shown in FIG. 3a.
[FIG. 3c] FIG. 3c is a schematic diagram of an exciting coil and a driving coil.
[FIG. 3d] FIG. 3d is a schematic diagram of the exciting coil and the driving coil when a magnetic shield member is inserted.
[FIG. 3e] FIG. 3e is a cross-sectional view when two exciting coils are arranged on upper and lower sides.
[FIG. 4] is an external view of a rectangular coil.
[FIG. 5a] FIG. 5a is an overall configuration plan diagram schematically showing an analysis device according to a second embodiment.
[FIG. 5b] FIG. 5b is an overall configuration front diagram schematically showing the analysis device according to the second embodiment.
[FIG. 6a] FIG. 6a is a cross section taken along a line A-A shown in FIG. 5b.
[FIG. 6b] FIG. 6b is a schematic diagram of an exciting coil and a driving coil when a magnetic shield member is inserted.
[FIG. 7a] FIG. 7a is an overall configuration plan diagram schematically showing an analysis device according to a third embodiment.
[FIG. 7b] FIG. 7b is an overall configuration front diagram schematically showing the analysis device according to the third embodiment.
[FIG. 8] FIG. 8 is an enlarged schematic diagram of a vicinity of an exciting coil in FIG. 7b.
[FIG. 9a] FIG. 9a is an overall configuration plan diagram schematically showing an analysis device according to a fourth embodiment.
[FIG. 9b] FIG. 9b is an overall configuration front diagram schematically showing the analysis device according to the fourth embodiment.
[FIG. 10] FIG. 10 is a cross section taken along a line A-A shown in FIG. 9b.
[FIG. 11] FIG. 11 is a schematic diagram of a conveying stage according to a fifth embodiment.
[FIG. 12] FIG. 12 is a schematic diagram of a conveying stage according to a sixth embodiment.

### Description of Embodiments

Hereinafter, embodiments of the invention will be described in detail with reference to the drawings as appropriate. Although specific embodiments are shown for understanding the invention, the embodiments are not intended to limiting interpretation of the invention.

First, a configuration of an analysis device, a processing operation for a sample, and measurement of the sample such as optical measurement and image measurement are common in the embodiments, and as an example, an operation of acquiring an image of the sample will be described by showing an example.

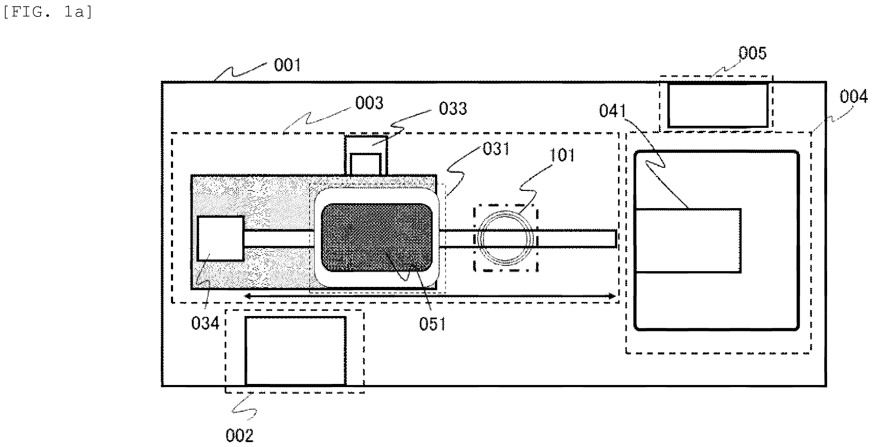

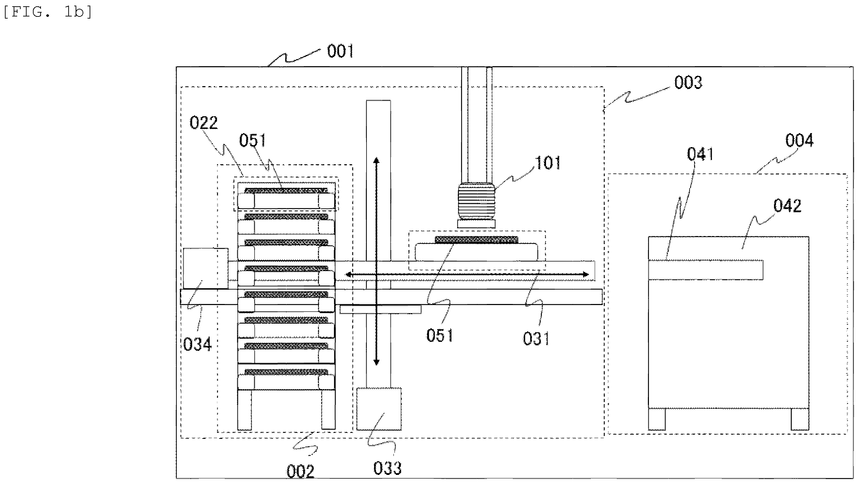

An example of an overall configuration of an analysis device will be described with reference to FIGS. 1a and 1b. FIGS. 1a and 1b are a plan diagram and a front diagram respectively. An analysis device 001 includes a storage unit 002, a conveying unit 003, a measurement unit 004, and a control unit 005. The storage unit 002 includes a plurality of sample container storage parts 022, and sample containers 051 are stored therein. The sample container 051 is a container having a plurality of wells such as 96 wells or 384 wells, and each of the wells contains a sample. The sample includes cells, blood, urine, bacteria, tissue pieces, and the like. A temperature of the storage unit is adjusted according to the measurement and the observation of the sample.

The conveying unit 003 includes a sample container holding part that prevents the sample container from dropping off or the like caused by a conveying operation during conveying of the sample container, and a conveying stage 031 in which the sample container holding part is provided. The conveying stage 031 moves in a vertical direction by an actuator 033 and moves in a horizontal direction by an actuator 034. The conveying stage 031 receives the sample container 051 from the sample container storage part 022, moves in a direction to a measurement stage 041, and delivers the sample container 051 to the measurement stage 041.

The measurement unit 004 receives the sample container 051 from the conveying unit 003 and measures the sample in each of the wells of the sample container 051 at the measurement stage 041 of a measurement part 042. The measurement part 042 performs optical density measurement, absorbance measurement, sample image acquisition, and the like. The sample container 051 on which the measurement by the measurement unit 004 has been completed is delivered to the conveying stage 031, and is moved and then returned from the conveying stage 031 to the sample container storage part 022.

The control unit 005 includes a storage medium and a monitor, and performs controls of operations of the entire device such as a temperature adjustment control of the storage unit 002, controls of movement of the conveying stage and an operation of a vibration mechanism of the conveying unit 003, controls of setting for measurement and a measurement operation of the measurement unit 004, storage of an acquired image, and the like.

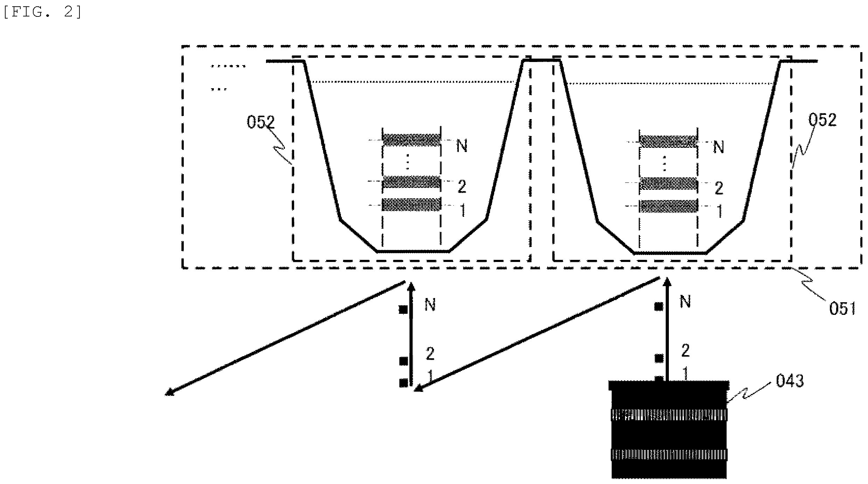

FIG. 2 shows an operation example when acquiring an image of a sample in the measurement part. A sample in a well 052 is imaged from below the well 052 by a camera 043. An object lens, an optical filter, or the like may be installed between the camera 043 and the well 052. Since the stirred sample is uniformly dispersed in a solution, the image of the sample can be acquired at any position in a height direction as long as in the solution in the well 052. Therefore, it is not necessary to strictly position a camera focal position at a height position. In order to improve the accuracy, images are acquired at a plurality of height positions 1 to N. When an imaging position is changed, the camera 043 moves in stages. Alternatively, when an object lens is provided between the camera 043 and the well 052, the imaging position is changed by the movement of the object lens in the stages. When the measurement of one well 052 is completed, the camera 043 moves to image the next well 052. Alternatively, the measurement stage 041 may move.

The measurement unit 004 includes an optical detector such as a photodiode in place of the camera 043, so that the optical density and the absorbance of the sample can be measured.

### First Embodiment

The vibration mechanism of the conveying stage of the present embodiment will be described with reference to FIGS. 1a to 4.

The vibration mechanism of the conveying stage is a mechanism for vibrating the sample container holding part in order to stir the sample solution. The overall configuration of the analysis device according to the present embodiment is shown in FIGS. 1a and 1b. FIGS. 1a and 1b are a plan diagram and a front diagram respectively.

In FIGS. 1a and 1b, the sample container holding part is vibrated between the sample container storage part 022 and the measurement stage 041. A magnetic field generated by an exciting coil 101 is present between the sample container storage part 022 and the measurement stage 041. While the conveying stage 031 is moving or passing through the magnetic field, the sample in the sample container is stirred by the vibration mechanism.

Next, the vibration mechanism of the conveying stage 031 will be described. A case where the conveying stage 031 moves or passes through the magnetic field region as shown in FIG. 1b will be described.

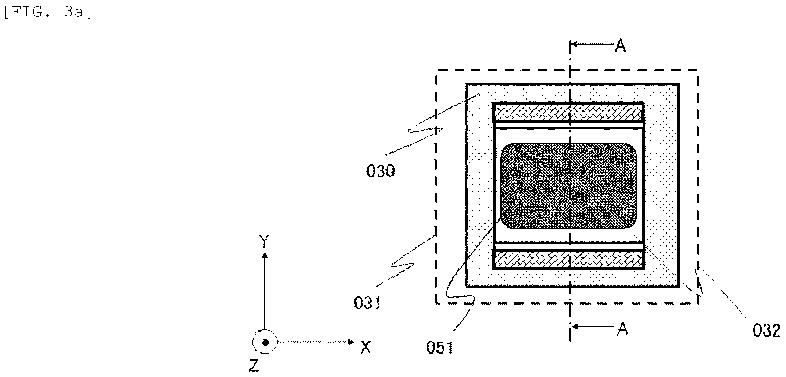

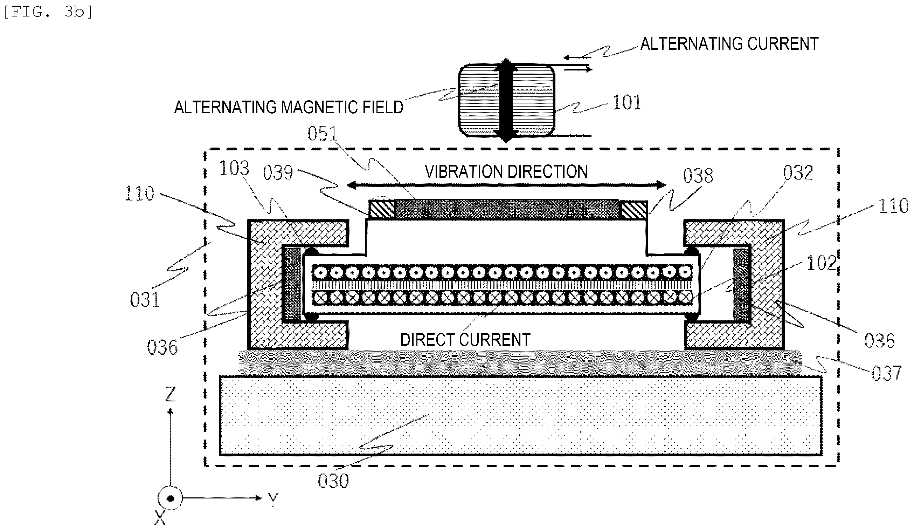

Here, in order to simplify the description, a coordinate system shown in FIG. 3a is set for the conveying stage 031, and an X direction is defined as a traveling direction of the conveying stage 031. FIG. 3b is a cross section taken along a line A-A shown in FIG. 3a. The sample container holding part 032 is provided with the exciting coil 101 generating the magnetic field region provided on the conveying path of the conveying unit 003 and a driving coil 102 related to the vibration of the sample container holding part 032, and the sample container holding part 032 is vibrated by the combination of the exciting coil and the driving coil. The sample container holding part 032 includes a guide member 103 (for example, a roller or a linear guide), so that the sample container holding part 032 can smoothly move independently of the conveying stage 031.

By vibrating the sample container holding part 032, the sample solution in the sample container 051 can be stirred. Therefore, the sample container 051 is fixed so as not to move relative to the sample container holding part 032. For example, as shown in FIG. 3b, an opening/closing stopper 039 presses the sample container 051 against a stopper 038 to fix the sample container 051. The fixing method is not limited. Dropping off or the like of the sample container caused by the vibration is prevented by the fixing. In addition, the vibration of the sample container holding part 032 can be efficiently transmitted to the sample.

When an alternating current flows through the exciting coil 101, an alternating magnetic field in a Z direction is generated on the conveying path. The exciting coil is fixed to a top surface of the analysis device 001 as the exciting coil 101 in FIG. 1b, for example. However, the exciting coil can be assembled to other components depending on the configuration of the analysis device. Power of the exciting coil 101 is supplied from an AC power supply provided in a power supply unit of the analysis device 001. A frequency of the vibration for stirring can be controlled by controlling an output frequency of the AC power supply. In addition, an amplitude of the vibration for stirring can be controlled by controlling an output current value. Here, a circular solenoid coil is used for the exciting coil 101. A shape of the exciting coil 101 may be a rectangular shape, a pancake shape, or the like. A core made of a soft magnetic material such as nickel, iron, ferrite, or electromagnetic steel may be inserted into the exciting coil 101, and accordingly the strength of the magnetic field can be increased.

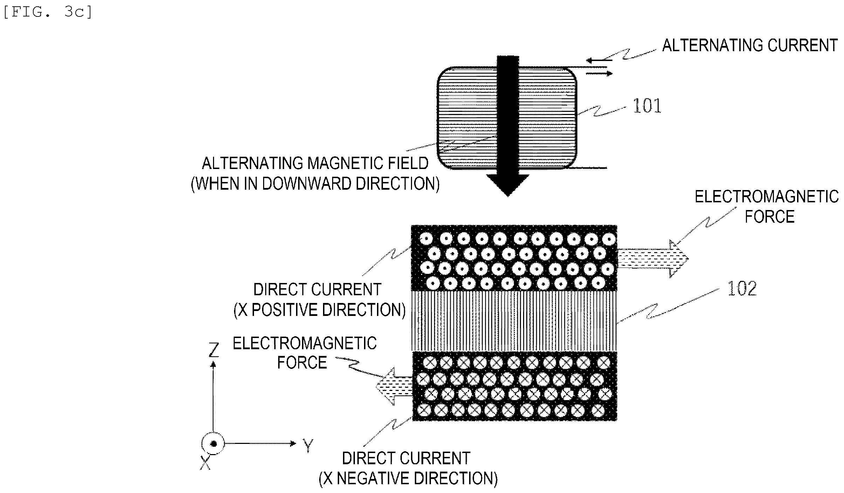

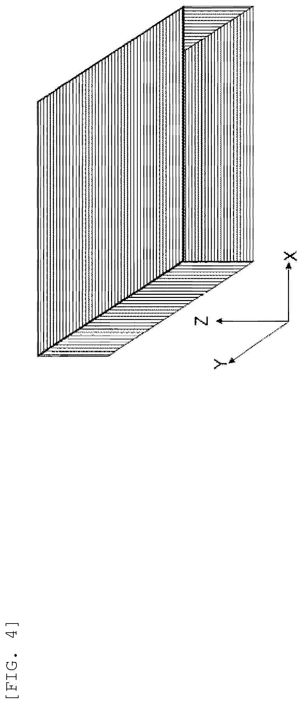

When the conveying stage 031 moves or passes through the magnetic field generated by the exciting coil 101, a direct current flows through the driving coil 102 incorporated in the sample container holding part 032, and thereby the sample container holding part 032 vibrates in a Y direction. The driving coil 102 is a rectangular coil as shown in FIG. 4. FIG. 3c is a schematic diagram of the exciting coil 101 and the driving coil 102. A portion of the driving coil 102 through which an electrical current in an X positive direction flows is an upper surface of the driving coil 102, and a portion of the driving coil 102 through which an electrical current in an X negative direction flows is a lower surface of the driving coil 102.

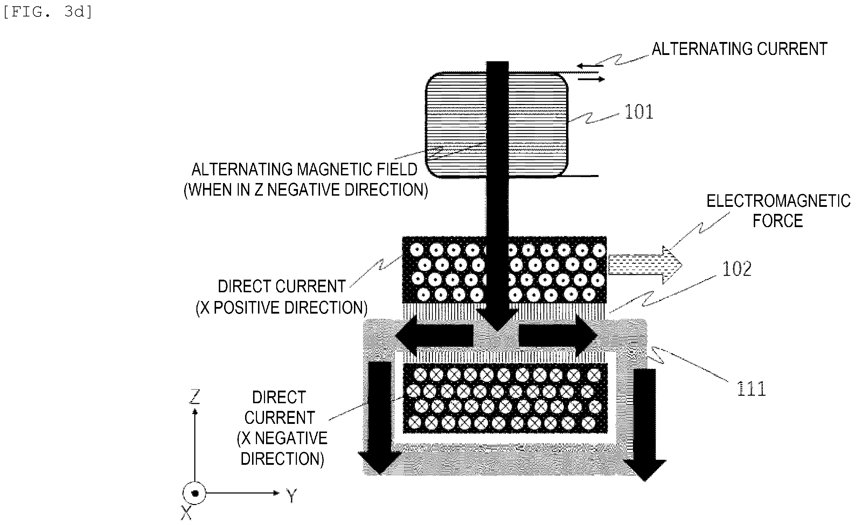

A case where the exciting coil 101 generates a magnetic field in a Z negative direction is considered. Since electrical current components that generate electromagnetic forces in directions opposite to each other exist in the driving coil 102, when a uniform magnetic field is applied, equal electromagnetic forces are generated in the Y positive and negative directions, and the driving coil 102 does not move. However, in practice, the magnetic field is not uniform, and a direction of vibration is determined by the electrical current component on the upper surface of the driving coil 102 close to the exciting coil 101. The exciting coil 101 is a generation source of the magnetic field. In this case, the electromagnetic force in the Y negative direction is a resistance force with respect to the electromagnetic force in the Y positive direction. Therefore, it is desirable that the electromagnetic force in the Y negative direction is small. Therefore, as shown in FIG. 3d, a magnetic shield member made of a ferromagnetic material is put in the driving coil 102, a magnetic flux to be shielded is collected in the ferromagnetic material, and a spatial magnetic field is reduced, thereby reducing the electromagnetic force in the Y negative direction. The magnetic shield member contains a material known as the ferromagnetic material, and contains, for example, an electromagnetic soft iron plate, an electromagnetic steel plate, and an amorphous alloy.

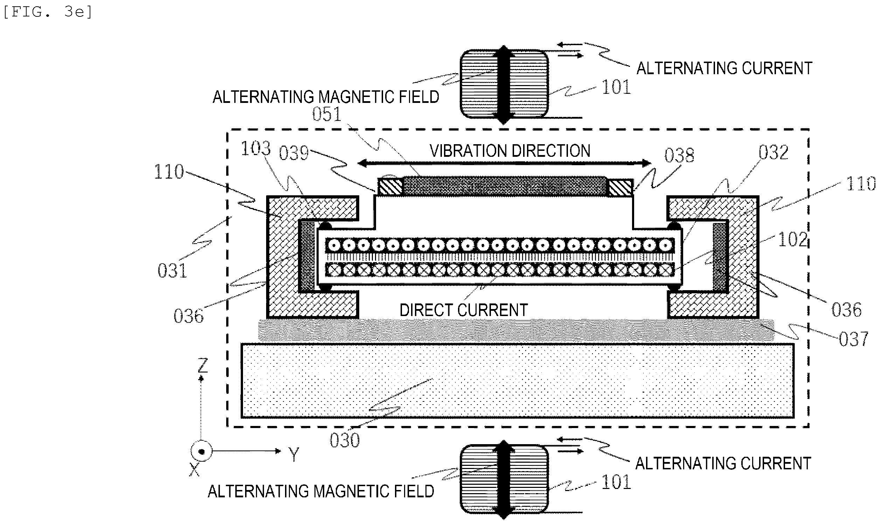

Further, two exciting coils 101 may be arranged on upper and lower sides as shown in FIG. 3e. Currents flow through the two exciting coils so as to always generate a magnetic field in the same direction. However, frequencies of the currents of the two exciting coils 102 are the same. Accordingly, the electromagnetic force acting on the upper surface of the driving coil 102 can be increased. Alternatively, it is possible to perform the stirring with higher time efficiency. In addition, when the magnetic field region is increased, the place where the stirring can be performed is widened, and the uniformity of the sample is ensured.

Power of the driving coil 102 is supplied from a DC power supply provided in the power supply unit. The rectangular coil can increase the electrical current component in the X direction that contributes to a Lorentz force and can improve the energy efficiency as compared with a coil of another shape. The driving coil 102 may have another shape, but needs to have an electrical current component in a direction perpendicular to a vibration direction. Therefore, an electric wire may be used instead of the coil with a shape.

The vibration direction can be set to be the X direction, the Y direction, the Z direction, or a combination thereof by the arrangement of the exciting coil 101 and the driving coil 102. An inner wall surface of a stopper 110 is provided with a cushioning member 036 at a contact portion with the sample container holding part 032, thereby reducing vibration and noise. Further, the conveying base 030 and the stopper 110 are coupled to each other via a vibration-proofing member 037. Accordingly, propagation of the vibration to parts other than the conveying stage can be prevented or reduced. In addition, since a vibration portion is limited to the sample container holding part in which the driving coil is incorporated, the influence of the vibration on the measurement unit can be reduced. In the analysis device, the measurement accuracy may decrease due to the propagation of the vibration to, in particular, the measurement unit 004, but the propagation of the vibration can be prevented or reduced. A rubber, a spring, a sponge, or the like can be used as the cushioning member 036 and the vibration-proofing member 037.

According to the invention, it is possible to perform the stirring on the conveying stage 031 during conveying, and it is not necessary to separately provide an independent stirring unit, and thus it is possible to make the analysis device compact. It is possible to shorten a time of stirring during conveying. As a result, it is possible to increase a sample treatment capacity per unit time.

In addition, in the stirring method of the invention, since it is not necessary to put a stirrer, a magnetic bead, or the like into the well, a cost of a consumable can be reduced. The risk of contamination or leakage caused by putting the stirrer, the magnetic bead, or the like is eliminated and pre-treatment and post-treatment are unnecessary, so that operability for a user is excellent. In addition, the optical measurement is not affected by the stirrer, the magnetic bead, or the like.

### Second Embodiment

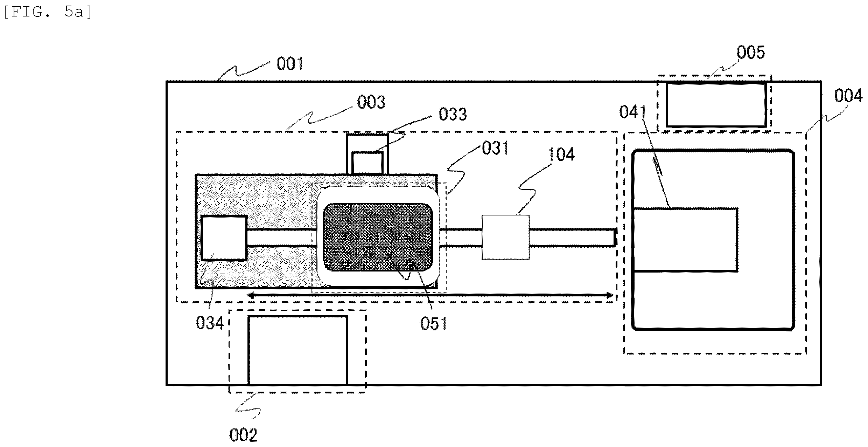

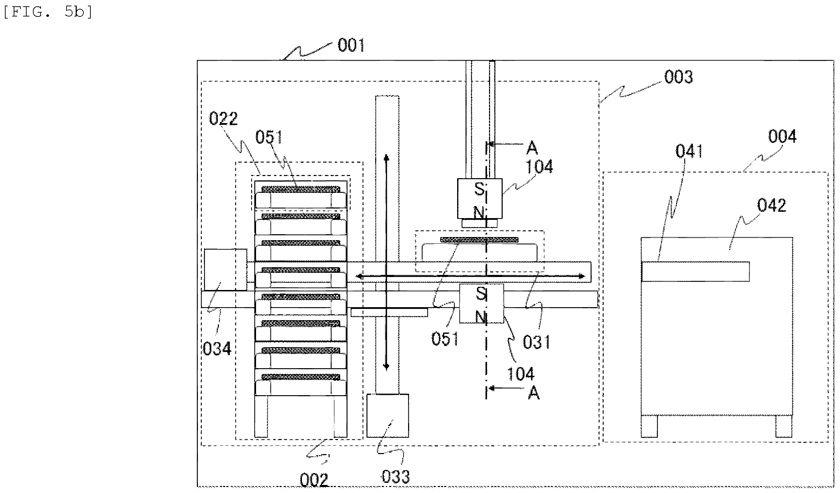

An overall configuration of an analysis device according to the present embodiment is shown in FIGS. 5a and 5b. FIGS. 5a and 5b are a plan diagram and a front diagram respectively. According to the invention, the sample solution is also stirred by vibrating the sample container holding part on the conveying stage 031 in the same manner as in the first embodiment. According to the invention, the stirring can be performed during conveying. The effect of stirring during conveying is the same as that of the first embodiment.

A magnet 104 that generates a magnetic field in the Z direction is disposed in the conveying unit 003, and an alternating current flows through the driving coil 102. The frequency of the vibration for stirring can be controlled by controlling an output frequency of an AC power supply. In addition, an amplitude of the vibration for stirring can be controlled by controlling an output current value.

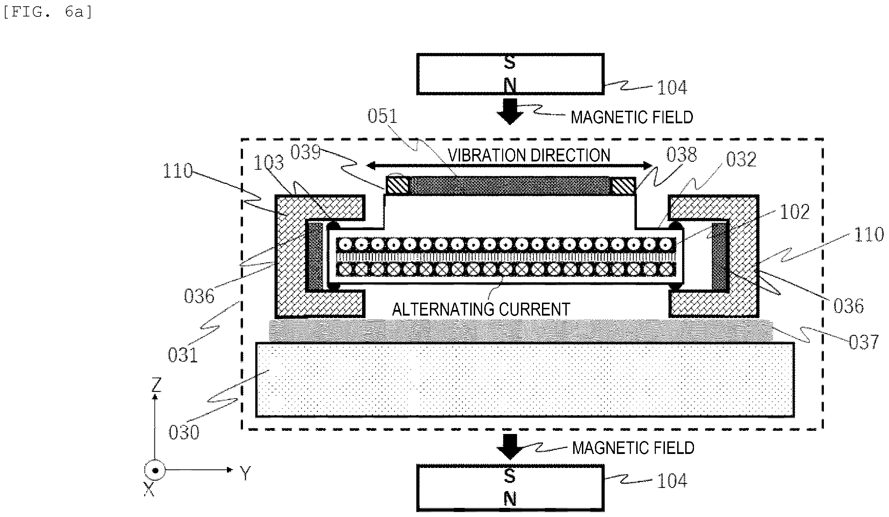

Although two magnets 104 are provided in FIG. 5b, at least one magnet may be provided. A cross section taken along a line A-A in FIG. 5b is shown in FIG. 6a. When two or more magnets are provided, since an electromagnetic force acting on an upper surface of the driving coil can be increased by arranging the magnets into different poles, the vibration can be performed efficiently with less power. Further, the same effect as that of a coil using a direct current can be obtained with the magnet 104.

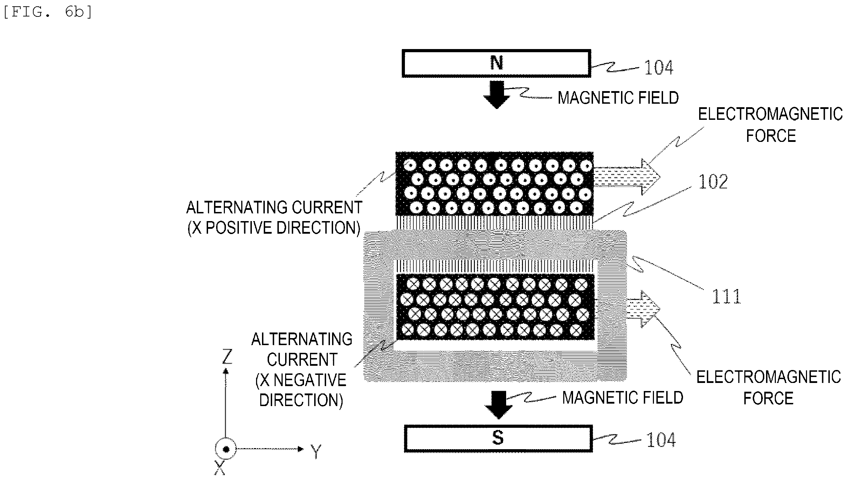

Further, as shown in FIG. 6b, a magnetic shield member made of a ferromagnetic material is put in the driving coil 102, and magnetic flux to be shielded is collected in the ferromagnetic material, and a spatial magnetic field is reduced, thereby reducing the electromagnetic force in the Y negative direction, as in the case of FIG. 3d. Therefore, the sample container holding part 032 can be vibrated efficiently.

### Third Embodiment

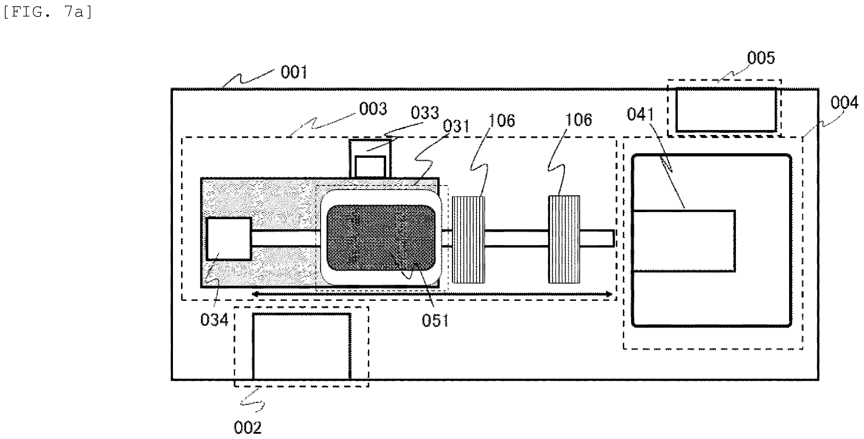

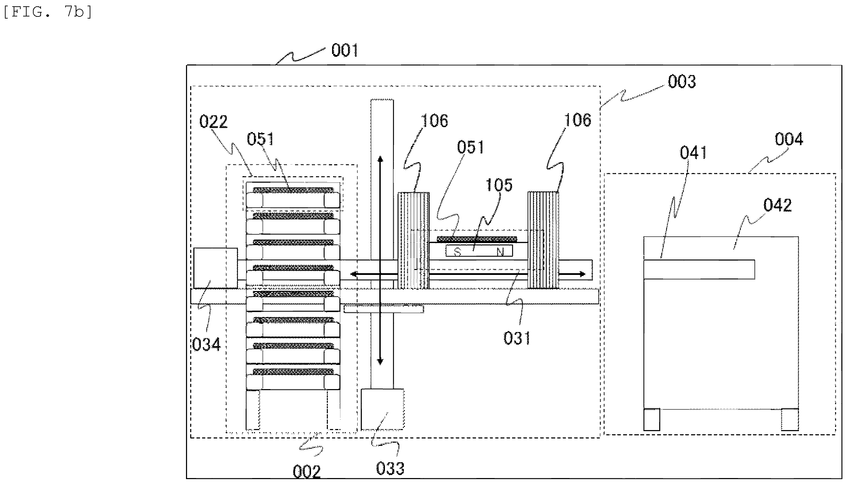

An overall configuration of an analysis device according to the present embodiment is shown in FIGS. 7a and 7b. FIGS. 7a and 7b are a plan diagram and a front diagram respectively. According to the invention, the sample solution is also stirred by vibrating the sample container holding part on the conveying stage 031 in the same manner as in the first embodiment. According to the invention, the stirring can be performed during conveying. The effect of stirring during conveying is the same as that of the first embodiment.

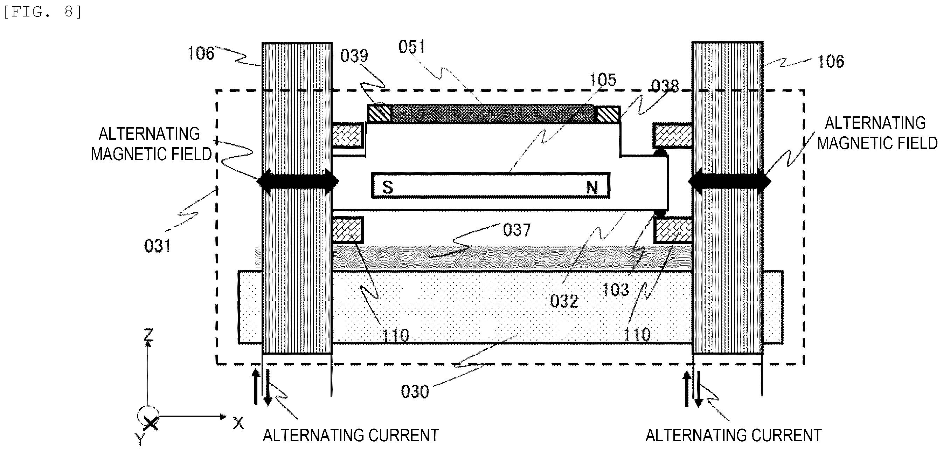

Two hollow exciting coils 106 through which the conveying stage 031 can pass are disposed in the conveying unit 003. Here, a circular solenoid coil is used as the exciting coil 106. A shape of the exciting coil 106 is not limited as long as the conveying stage 031 can pass through the exciting coils 106. A magnet 105 is provided in the sample container holding part 032. An enlarged diagram of a vicinity of the exciting coils 106 in FIG. 7b is shown in FIG. 8. When the sample container holding part 032 is between the two exciting coils 106, the magnet 105 and the sample container holding part 032 are vibrated in the X direction by applying an alternating current to the two exciting coils 106 such that forces in the same direction are applied to the magnet 105. A frequency of the vibration for stirring can be controlled by controlling an output frequency of an AC power supply. In addition, an amplitude of the vibration for stirring can be controlled by controlling an output current value.

### Fourth Embodiment

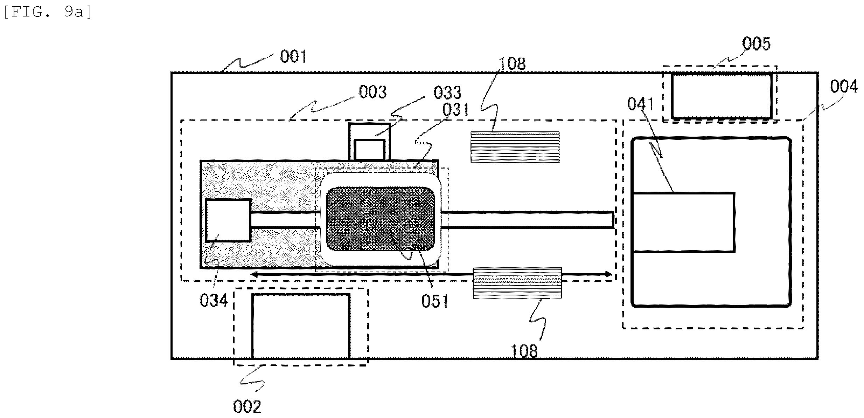

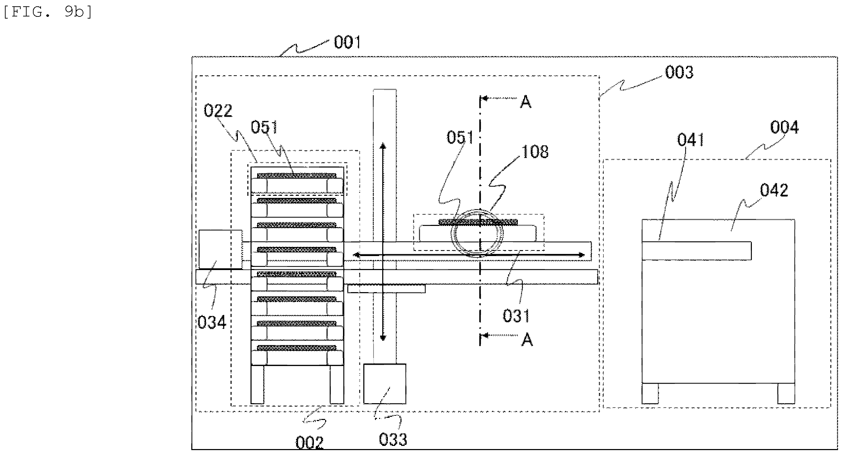

An overall configuration of an analysis device according to the present embodiment is shown in FIGS. 9a and 9b. FIGS. 9a and 9b are a plan diagram and a front diagram respectively. According to the invention, the sample solution is also stirred by vibrating the sample container holding part on the conveying stage 031 in the same manner as in the first embodiment. According to the invention, the stirring can be performed during conveying. The effect of stirring during conveying is the same as that of the first embodiment.

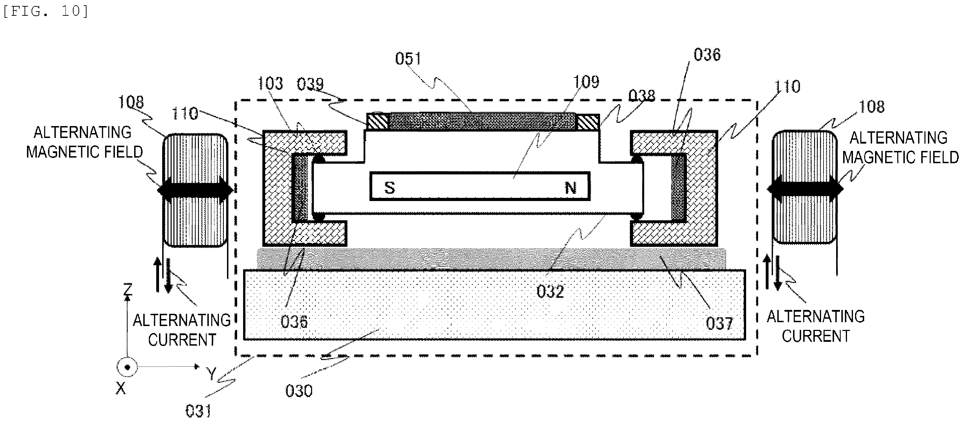

Two exciting coils 108 that generate a magnetic field in the Y direction are disposed in the conveying unit 003. The sample container holding part 032 includes a magnet that generates a magnetic field in the Y direction. A cross section taken along a line A-A of FIG. 9b is shown in FIG. 10. When the sample container holding part 032 is between the exciting coils 108, the magnet 109 and the sample container holding part 032 are vibrated in the Y direction by applying an alternating current to the two exciting coils 108 such that forces in the same direction are applied to the magnet 109.

A frequency of the vibration for stirring can be controlled by controlling an output frequency of an AC power supply as in the other embodiments. In addition, an amplitude of the vibration for stirring can be controlled by controlling an output current value.

### Fifth Embodiment

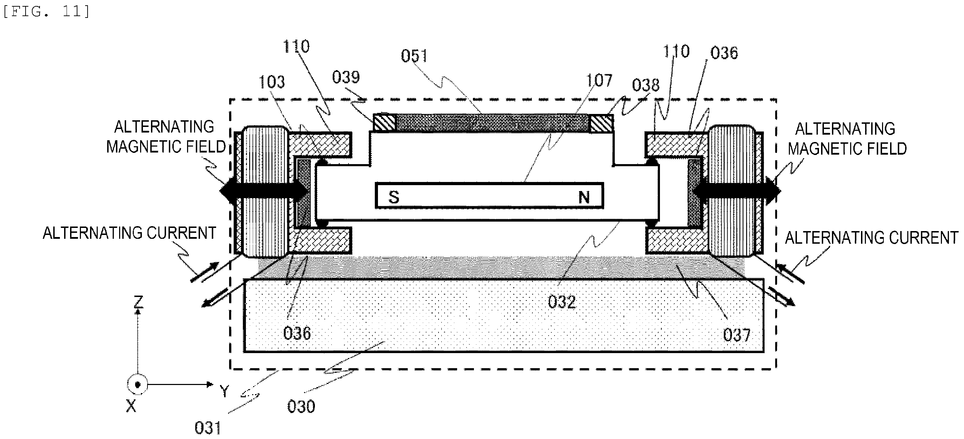

A configuration of a conveying stage according to the present embodiment is shown in FIG. 11. According to the invention, the sample solution is also stirred by vibrating the sample container holding part on the conveying stage 031 in the same manner as in the first embodiment. According to the invention, the stirring can be performed during conveying. The effect of stirring during conveying is the same as that of the first embodiment.

In the invention, an exciting coil is installed in the stopper 110 on the conveying stage 031. A magnet 407 is provided in sample container holding part 032. A frequency of the vibration for stirring can be controlled by controlling an output frequency of an AC power supply. In addition, an amplitude of the vibration for stirring can be controlled by controlling an output current value. The present embodiment is different from the third embodiment and the fourth embodiment in that the alternating magnetic field is provided on the conveying path in the third embodiment and the fourth embodiment, whereas the alternating magnetic field is provided on the conveying stage, and stirring can be performed regardless of the position on the conveying path in the present embodiment. In addition, an effect of miniaturization and power saving is obtained by providing a mechanism that generates the alternating magnetic field on the conveying stage. The magnet 407 may be a coil that generates a magnetic force by an electrical current.

### Sixth Embodiment

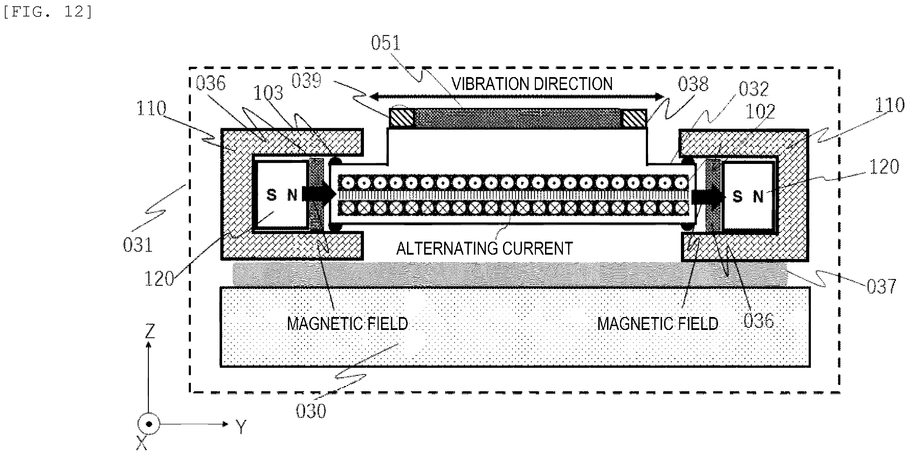

A configuration of a conveying stage according to the present embodiment is shown in FIG. 12. According to the invention, the sample solution is also stirred by vibrating the sample container holding part on the conveying stage 031 in the same manner as in the first embodiment. According to the invention, the stirring can be performed during conveying. The effect of stirring during conveying is the same as that of the first embodiment.

In the invention, a magnet is provided between the cushioning member 036 and the stopper 110 of the conveying stage 031. Further, the driving coil 102 is provided in the sample container holding part 032. An alternating current flows through the driving coil 102. A frequency of the vibration for stirring can be controlled by controlling an output frequency of an AC power supply. In addition, an amplitude of the vibration for stirring can be controlled by controlling an output current value.

The present embodiment is different from the second embodiment in that the magnet is provided on the conveying path in the second embodiment, whereas the magnet is installed on the conveying stage, and the stirring can be performed regardless of the position on the conveying path in the present embodiment. In addition, an effect of miniaturization and power saving is obtained by integrating a stirring mechanism on the conveying stage. The magnet may be a coil that generates a magnetic force by an electrical current.

The invention is not limited to the above embodiments, and includes various modifications. For example, the above embodiments have been described in detail for easy understanding of the invention, and the invention is not necessarily limited to those including all of the configurations described above. Further, a part of the configuration of one embodiment can be replaced with a configuration of another embodiment, and the configuration of another embodiment can be added to the configuration of one embodiment. Apart of a configuration of each embodiment can be deleted.

### Reference Sign List

- 001: analysis device
- 002: storage unit
- 003: conveying unit
- 004: measurement unit
- 005: control unit
- 022: sample container storage part
- 030: conveying base
- 031: conveying stage
- 032: sample container holding part
- 033: actuator
- 034: actuator
- 036: cushioning member
- 037: vibration-proofing member
- 038: stopper
- 039: an opening/closing stopper
- 041: measurement stage
- 042: measurement part
- 043: camera
- 051: sample container
- 052: well
- 101: exciting coil
- 102: driving coil
- 103: guide member
- 104: magnet
- 105: magnet
- 106: exciting coil
- 107: magnet
- 108: exciting coil
- 109: magnet
- 110: stopper
- 111: magnetic shield member
- 120: magnet

## Claims

1. An analysis device for measuring and observing a sample solution, comprising:
a storage unit configured to store a container containing a sample;
a measurement unit configured to measure and observe the sample;
a conveying unit configured to convey the container between the storage unit and the measurement unit; and
a control unit configured to control and record operations of the storage unit, the measurement unit, and the conveying unit, wherein
the conveying unit includes a sample container holding part configured to prevent the container from dropping off, a conveying stage in which the sample container holding part is provided, and a vibration mechanism configured to use a magnetic field and an electrical current or magnet to vibrate the sample container holding part on a conveying path and stir the sample solution in the container.

2. The analysis device according to Claim 1, wherein
the conveying unit includes the sample container holding part, the conveying stage, and a part configured to generate a magnetic field on the conveying path, the sample container holding part includes a driving coil through which an electrical current flows, and the sample container holding part is vibrated by the magnetic field on the conveying path and the current flowing through the driving coil.

3. The analysis device according to Claim 2, wherein
the part configured to generate a magnetic field on the conveying path is an exciting coil, and when an alternating current flows through the exciting coil, an alternating magnetic field is generated and a direct current flows through the driving coil.

4. The analysis device according to Claim 2, wherein
the part configured to generate a magnetic field on the conveying path is an exciting coil, and when a direct current flows through the exciting coil, a magnetic field is generated and an alternating current flows through the driving coil.

5. The analysis device according to Claim 2, wherein
the part configured to generate a magnetic field on the conveying path includes a magnet, and an alternating current flows through the driving coil.

6. The analysis device according to Claim 1, wherein
the conveying unit includes the sample container holding part, the conveying stage, and a part configured to generate a magnetic field on the conveying path by an exciting coil through which an electrical current flows, the sample container holding part includes a magnet, and the sample container holding part is vibrated by an electrical current flowing through the exciting coil on the conveying path.

7. An analysis device for measuring and observing a sample solution, comprising:
a storage unit configured to store a container containing a sample;
a measurement unit configured to measure and observe the sample;
a conveying unit configured to convey the container between the storage unit and the measurement unit; and
a control unit configured to control and record operations of the storage unit, the measurement unit, and the conveying unit, wherein
the conveying unit includes a sample container holding part configured to prevent the container from dropping off, and a conveying stage in which the sample container holding part is provided, and
a magnet is provided in the conveying stage, a driving coil is provided in the sample container holding part, and the sample container holding part is vibrated by an alternating current flowing through the driving coil.

8. An analysis device for measuring and observing a sample solution, comprising:
a storage unit configured to store a container containing a sample;
a measurement unit configured to measure and observe the sample;
a conveying unit configured to convey the container between the storage unit and the measurement unit; and
a control unit configured to control and record operations of the storage unit, the measurement unit, and the conveying unit, wherein
the conveying unit includes a sample container holding part configured to prevent the container from dropping off, and a conveying stage in which the sample container holding part is provided,
an exciting coil is provided in the conveying stage, a magnet is provided in the sample container holding part, and the sample container holding part is vibrated by an alternating current flowing through the exciting coil.
